# EUROPEAN PATENT SPECIFICATION

(11) **EP 1 804 546 B1**
(45) Date of publication and mention of the grant of the patent: **26.03.2008**
(21) Application number: 06290022.0
(22) Date of filing: 03.01.2006
(51) Int. Cl.: H04Q 7/38, H04L 29/06

(54) **Method of providing seamless session mobility**
Verfahren zur Bereitstellung von nahtlose mobile Sitzung
Procédé fournissant de mobilité de session sans interruption

(43) Date of publication of application: 04.07.2007
(73) Proprietor: Alcatel Lucent, 75008 Paris (FR)
(72) Inventor: Wahl, Stefan, Dipl.-Ing., 71701 Schwieberdingen (DE); Laible, Volker, Dipl.- Ing., 70469 Stuttgart (DE)
(74) Representative: Schmidt, Werner Karl

(56) References cited:
- WO-A-20/04114707
- US-A1- 2003 097 484
- US-A1- 2003 143 987
- US-B1- 6 243 581

## Description

The present invention relates to a method and a call signalling server for providing seamless session mobility.

Nowadays, there is a variety of different telecommunication terminals such as mobile phones, wireline phones, cordless phones, multi-media personal computers, laptops with softphone capabilities, etc. Within each category, a multitude of different technologies is available. For example, a mobile phone may be operated under GSM, GPRS, or UMTS (GSM = Global System for Mobile Communications; GPRS = General Packet Radio Service; UMTS = Universal Mobile Telecommunications System). Likewise, a VoP phone may be connected to the global telephony network via DSL or Wi-Fi (VoP = Voice over Packet; DSL = Digital Subscriber Lines; Wi-Fi = Wireless Fidelity).

Usually, each access network technology belongs to a different service provider or carrier. This may pose a problem if a subscriber during an on-going communication session, e.g., a voice call or a video conference, would like to switch from a first terminal connected to a first access network to a second terminal connected to a second access network.

Today's solutions allow seamless session mobility, also known as handover, only on the same access network technology, e.g., from GSM to GSM cells. Seamless session mobility between different carriers and different access network technology is not available today.

WO 2004/114707 A1 describes a handover process for a mobile communication terminal from a first network to a second network. For example, the quality of a media path from a remote corresponding node to a mobile terminal through a WLAN deteriorates as the mobile terminal moves away from the WLAN. Thus, the mobile terminal, which comprises a WLAN interface and a UMTS interface, initiates via the SIP protocol a handover from the WLAN to an alternative available network such as a UMTS network (SIP = Session Initiation Protocol). Once the mobile terminal has received the last data packets via the WLAN network, the WLAN interface of the mobile node terminal is set to a sleep mode and the data packets are received at the mobile terminal via the UMTS interface through the UMTS network.

Likewise, WO 2005/027563 A1 describes a handover process for a mobile communication node (terminal) from a first network to a second network, in particular a method for releasing allocated resources at SIP handover. When mobile communication is handed over from a first link to a second link, in order to relinquish resources as soon as possible, the release of resources allocated to the first link is initiated in response to the generation of an ACK signal by the mobile node, rather than waiting for a refresh command to time out.

US 2004/0233866 A1 refers to a switching of radio coverage of a terminal from a first access network to a second access network during a software download, in particular to a method of non-real time software download in an IP-based mobile communication system with heterogeneous access technologies based on the SIP protocol (IP = Internet Protocol). For example, a user with a multimode terminal initiates a download of a software and during the download process he has to perform a vertival handover, e.g., from GPRS to UMTS or from a cellular network to a WLAN (GPRS = General Packet Radio Service).

US 6 243 581 B1 describes a mobile computer system capable of seamless roaming between wireless communication networks. First, datagrams output by a first application are routed to another application via a first connection provided by a first wireless communication network. When a higher bandWidth data connection via a second wireless communication network is available, a second connection is established. Thus, a user may have concurrent wireless data connections via both the first network and the second network. Then a network access arbitrator causes the transfer of datagrams to be seamlessly handed off from the first network to the second network while maintaining the session between the applications.

It is the object of the present invention to provide seamless session mobility between two terminals.

The object of the present invention is achieved by a method of performing a handover of a real time communication session, according to claim 1. The object of the present invention is further achieved by a call signalling server for performing a handover of a real time communication session, according to claim 8.

The handover according to the present invention does not require a reestablishment of the connection which leads to an interruption of the communication session. Instead, the handover proceeds completely seamlessly, i.e., the subscriber's communication partner does not notice the handover. There is no way to identify the handover due to audio disturbance, video disturbance, or the change of an IP address or an IP port.

The present invention achieves seamless session mobility between any terminal of any access network across any carrier or service provider. No new network element is required as the invented method is a software solution which can be implemented on an existing infrastructure. Particularly, it can be installed without any modification of the IMS/TISPAN standard (IMS = IP Multimedia Subsystem; TISPAN = Telecommunications and Internet converged Services and Protocols for Advanced Networks).

The present solution requires only a low development effort and is compliant to the IMS and future IMS/TISPAN standard.

The invention allows a concurrent session mobility of the connected users without any restriction. It is not only applicable if the users are in different access networks or belong to different service providers or carriers but also if the users are in the same access network or belong to the same service providers or carriers.

Further advantages are achieved by the embodiments of the invention indicated by the dependent claims.

According to a preferred embodiment of the invention, an application server assigned to a call signalling server determines a network node which processes the current communication session, i.e., a network node which has access to and can modify the data packets associated to the current communication session. Preferably, the application server selects a network node of the subscriber's service provider home network or of the communication partner's service provider home network or of a core network of the communication session. The choice may depend on aspects such as requiring a minimum of network resources, implementing an authorisation function, e.g., for identifying the requesting subscriber, handover speed, handover comfort, handover fees, etc.

Preferably, the subscriber requesting the handover receives a call at his second terminal where the communication session is to be transferred. The call originates from the selected network node and indicates an up-coming session setup on the second terminal. Once the subscriber accepts the call, e.g., by hooking off the second terminal, a communication session between said network node and the second terminal is established. After the communication session has been transferred from his first terminal to his second terminal, the subscriber hangs up the first terminal and the exchange of data packets between the network node and the first terminal of the subscriber via the first access network is terminated within the context of the communication session

According to another preferred embodiment of the invention, a conferencing function is added to an internal media pipe of the selected network node for the mixing and copying of the data packets. By means of the conferencing function, the on-going communication session is conferenced to both terminals of the subscriber, and the media data streams originating from both terminals of the subscriber are mixed and put as a single media data stream on the communication session connection directed to the subscriber's communication partner. After the termination of the handover, the conferencing function is removed out of the internal media pipe of the network node and the resources assigned to the conferencing function are released.

According to another preferred embodiment of the invention, the handover is triggered by the subscriber requesting the handover on the first terminal of the subscriber, e.g., by pushing a button on the keypad of the terminal, by dialling a number, or by bringing the terminal in the vicinity of the second terminal or a device associated with the second device for triggering the handover by , e.g., RFID or Bluetooth (RFID = Radio Frequency Identification).

In a preferred embodiment, the performance of the handover is set as a user service in the context of the subscriber services rendered by the subscriber's network provider to the subscriber. The subscriber may specify the preferences and settings applying to specific situations and the rules governing the handover. The subscriber related data are stored in a data base of an application server and accessed in response to a trigger. Alternatively, said data related to settings and/or subscriber preferences of the handover are stored in a data base provided by the network provider for the storage of subscriber related information, such as subscriber location, subscriber addresses, etc, such as a HSS (HSS = Home Subscriber Service).

According to another preferred embodiment of the invention, a call signalling server of the communication network generates control messages and sends the control messages via a signalling protocol to the network node, whereby the control messages regard the processing of the handover. Preferably, the control messages have been generated on the basis of data related to pre-defined settings and/or subscriber preferences of the handover.

For the control of the handover any suitable control and signalling protocol may be used. Preferably, the signalling traffic of the call signalling server for control of the network node complies with the session initiation protocol or the H.323 protocol or the media gateway control protocol.

According to another preferred embodiment of the invention, the call signalling server is adapted to control the set-up of the communication session as two discrete session parts, whereby the first session part is between the subscriber and the network node and the second session part is between the network node and the subscriber's communication partner, and wherein the second session part between the network node and the subscriber's communication partner remains untouched during the handover. For example, the corresponding network node or call signalling server runs as a back-to-back user agent.

These as well as further features and advantages of the invention will be better appreciated by reading the following detailed description of presently preferred exemplary embodiments taken in conjunction with accompanying drawings of which:
- Fig. 1: is a block diagram of a communication network according to an embodiment of the invention.
- Fig. 2: is a message flow diagram showing a communication via a first terminal of a subscriber in a communication network according to another embodiment of the invention.
- Fig. 3: is a block diagram showing a communication via a first terminal of a subscriber before a handover and giving details of a network node according to an embodiment of the invention.
- Fig. 4: is a block diagram showing a communication via a first and a second terminal of a subscriber during a handover and giving details of a network node and of a call signalling server according to an embodiment of the invention.
- Fig. 5: is a message flow diagram showing a communication via a first and a second terminal of a subscriber during a handover in a communication network according to another embodiment of the invention.
- Fig. 6: is a block diagram showing the copying of communication session data in a network node according to an embodiment of the invention.
- Fig. 7: is a block diagram showing the mixing of communication session data in a network node according to an embodiment of the invention.
- Fig. 8: is an alternative embodiment of the message flow diagram shown in Fig. 5.
- Fig. 9: is still another alternative embodiment of the message flow diagram shown in Fig. 5.
- Fig. 10: is a block diagram showing a communication via a second terminal of a subscriber after a handover and giving details of a network node according to an embodiment of the invention.

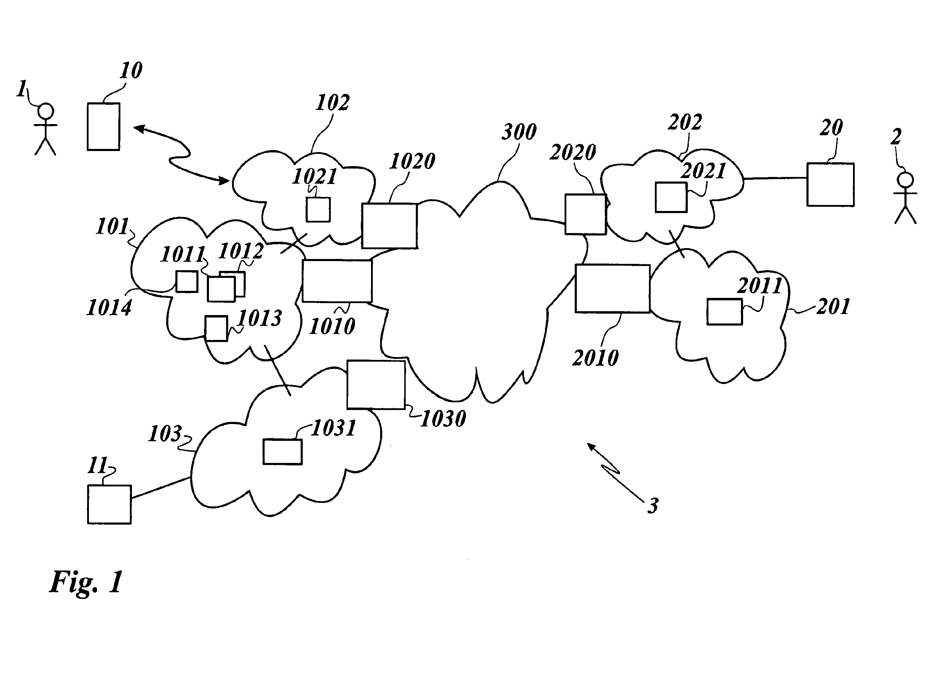

Fig. 1 shows a communication network 3 comprising a packet-based core network 300, access networks 101, 102, 103, 201, 202, network nodes 1010, 1020, 1030, 2010, 2020, several telephone terminals 10, 11 and 20, a subscriber 1, and a communication partner 2 of the subscriber 1. The telephone terminals 10 and 11 are assigned to the subscriber 1, and the telephone terminal 20 is assigned to his communication partner 2. The telephone terminal 10 may be, e.g., a mobile phone operated under UMTS, and the telephone terminals 11 and 20 may be VolP phones.

The VolP telephone terminals 11,20 are IP-phones or computers executing an IP phone client. For example, these terminals are SIP-phones or computers executing a SIP client. According to a specific embodiment of this invention, the VolP telephone terminal 10 is a small mobile terminal with low weight, small dimension and reduced functionality, whereas the VolP phone terminal 11 is a convenient fixed terminal, for example a computer with a SIP-client and a wide choice of functions.

The communication network 3 may be a NGN communication network which is based on a distributed IP network (NGN = Next Generation Network). In a preferred embodiment, the communication network 3 complies with the IMS or the TISPAN standards.

The access networks 101, 102, 103, 201, 202 of the communication network 3 provide the telephone terminals 10, 11, 20 with access to the core network 300. Each of the access networks 101, 102, 103, 201, 202 may be operated by a different provider (cross operator scenario). Each access network 101, 102, 103, 201, 202 may be based on a different technology - both non packet based and packet based - such as GSM, GPRS, UMTS, Wi-Fi, WiMax, LMDS, DSL, cable, and others (WiMax = Worldwide Interoperability for Microwave Access; LMDS = Local Multipoint Distribution System). However, according to another embodiment of the invention, the terminals 10, 11 and 20 may be connected to access networks which are based on the same technology and belong to the same provider.

The access network 101 is a home network of the subscriber 1. It comprises one or more call signalling servers 1011 and 1012, a data base 1013, e.g., a data base 1013 of a HSS module, and an application server 1014. The access network 101 is connected to the core network 300 by means of the network node 1010.

To enable the establishment of communications to his telephone terminals 10, 11, the subscriber 1 has to choose a service provider, sign a subscription contract with service provider, and configurate his telephone terminals 10, 11 accordingly. For example, the subscriber 1 chooses a service provider operating the access network 101, whereby the access network 101 becomes the home network of the subscriber. Telephone configuration data, subscriber data, subscriber preferences, etc. are stored on the data base 1013 of the HSS module associated to the access network 101. The data stored on the data base 1013 of the HSS module comprise the necessary information which makes it possible for the telephone terminals 10, 11 to register themselves to the visited access networks 102 and 103 and make the telephone service provided by the service providers of the home access network 101 and the visited access networks 102, 103 available to the subscriber 1.

The access network 102 is a visited network where the subscriber 1 is currently registered in for use of the telephone terminal 10. It comprises a call signalling server 1021, and is connected to the core network 300 by means of the network node 1020, and to the access network 101. Likewise, the access network 103 is a another visited network of the subscriber 1 where the subscriber 1 is currently registered in for use of the telephone terminal 11. It comprises a call signalling server 1031, and is connected to the core network 300 by means of the network node 1030, and to the access network 101.

The access network 201 is a home network of the subscriber's communication partner 2. It comprises a call signalling server 2011, and is connected to the core network 300 by means of the network node 2010. The access network 202 is a visited network where the communication partner 2 is currently registered in for use of his telephone terminal 20. It comprises a call signalling server 2021, and is connected to the core network 300 by means of the network node 2020, and to the access network 201.

The system part of the communication network 3 which is independent of the access technique is referred to as core network 300, also known as backbone network. In a preferred embodiment, it is an IP based network such as the Internet.

In a first embodiment, the network nodes 1010, 1020, 1030, 2010, 2020 are media gateways. In another embodiment, the network nodes 1010, 1020, 1030, 2010, 2020 are represented by session border controllers (= SBC) or by similar piece of network equipment, or by a collection of functions that control real-time session traffic at the signaling, call-control, and packet layers as the traffic data packets cross the network border between the access networks 101, 102, 103, 201, 202 and the core network 300. Alternatively, the network nodes 1010, 1020, 1030, 2010, 2020 may possess the functionality of media gateways and/or session border controllers and be integrated into network elements of the communication network 3 which handle the data and/or signalling traffic associated with the communication session between the subscriber 1 and the subscriber's communication partner 2.

The call signalling servers 1011, 1012, 1021, 1031, 2011 and 2021 are part of the control plane of the communication network 3. They provide all control functions for network elements of the transport layer of the communication network 3. For example, the call signalling servers 1011, 1012, 1021, 1031, 2011 and 2021 are media gateway controllers which are within an NGN architecture the centralized intelligent instance for providing new VolP or multimedia services. A media gateway controller is a single entity which controls several media gateways via a specific interface (for example H.248) for the sake of providing an access point for subscribers of telecommunication networks. The media gateway controller provides independent call functionalities together with switching functions for basic - and supplementary - services in addition with, for example, billing, routing and measurement capabilities for network operators and telecommunication service providers.

But, it is also possible that the communication network 3 is a pure IP network and the call signalling servers 1011, 1012, 1021, 1031, 2011 and 2021 are SIP-servers supporting the establishment of VolP connections through the IP network constituted by the communication network 3, or other network elements provided with the functionality of a SIP-server.

In a preferred embodiment, the call signalling servers 1011, 1012, 1021, 1031, 2011 and 2021 may possess the functionality equivalent to SIP servers such as I-CSCF, S-CSCF, and P-CSCF (I-CSCF = Interrogating Call Session Control Function; S-CSCF = Serving Call Session Control Function; P-CSCF = Proxy Call Session Control Function). However, call signalling servers 1011, 1012, 1021, 1031, 2011 and 2021 are not limited to the SIP protocol but may operate under any other suitable signalling protocol such as H.323, MEGACO, or H.248 (MEGACO = Media Gateway Control Protocol),

The subscriber 1 currently communicates in a communication session with his communication partner 2. For communicating, the subscriber 1 uses the telephone terminal 10. However, the subscriber 1 wishes to switch to his other telephone terminal 11 while continuing the communication session. For example, the subscriber 1 receives at his UMTS mobile phone 10 a voice call from his communication partner 2, e.g., a business partner, while he is walking to his office. Arriving at his office, he would like to switch the on-going voice call communication session from his mobile phone 10 to his wireline DSL office phone 11. This would allow him to use the hands-free speaking system of the DSL office phone 11 while searching for relevant data on his desktop computer.

The subscriber wants the handover of the communication session to be performed without any interruption and without his communication partner 2 noticing the handover of the communication session due to, e.g., audio and/or video disturbance. That means that the session handover has to be performed seamlessly.

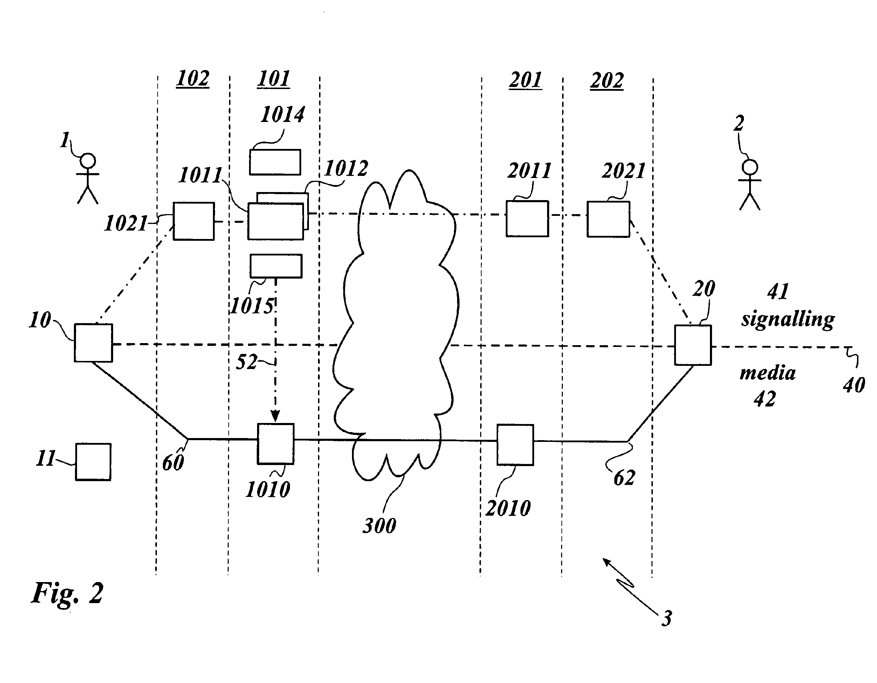

Fig. 2 shows the situation in the communication network 3 before the subscriber 1 decides to trigger the handover. The architecture of the communication network 3 is split into two main sections, the signalling plane 41, also known as control plane, which is responsible for controlling the communication connection between users of the communication system 3, and the transport plane 42, which is responsible for the transportation of the associated media streams. The signalling plane 41 used for the transmission of signalling and control traffic - indicated in Fig. 2 as dot-dashed lines - is displayed in the upper part of Fig. 2. The media transport plane 42 used for the transmission of media data traffic - indicated in Fig. 2 as solid lines - is displayed in the lower part of Fig. 2. For better distinction in Fig. 2, both planes are separated by means of the dashed line 40.

The media transport plane 42 can be formed by various different types of physical networks, for example ATM networks or MPLS networks (ATM = Asynchronous Transfer Mode; MPLS = Multi Protocol Label Switching), which are linked via a common level 3 IP protocol layer. The signalling plane 41 can be implemented by means of any protocol suitable for the transmission of signal/control signals, such as SIP, H.323, MEGACO, etc.

The various data traffic network elements such as media gateways, access gateways and switching nodes responsible for the switching and routing of the media streams through the communication network 3 are controlled from the signalling plane 41. Such data traffic network elements support stream-like communication as voice, fax or video-communication between two or more terminals linked to the communication network 3. Further, such data traffic network elements may provide seamless working of voice and fax connections between, e.g., public switched telephone networks and IP based networks.

The signalling traffic associated with the current communication session between the subscriber 1 and his communication partner 2 is exchanged among network elements on the a path through the communication network 3 between the subscriber's terminal 10 and the communication partner's terminal 11. For example, the signalling traffic flows from the first terminal 10 of the subscriber 1 to the call signalling server 1021 in the subscriber's visited access network 102, from there to the call signalling server 1011 in the subscriber's home network 101, and from there through the core network 300 to the call signalling server 2011 in the home network 201 of the communication partner 2. The call signalling server 2011 forwards the signalling traffic to the call signalling server 2021 in the visited access network 202 of the communication partner 2, and from there the signalling traffic flows to the terminal 20 of the communication partner 2. Thus, there is a continuous signalling traffic connection between the first terminal 10 of the subscriber 1 and the terminal 20 of the communication partner 2.

The media traffic, i.e., the data packets are exchanged between the first terminal 10 of the subscriber 1 and the terminal 20 of the communication partner 2. For example, the data packets flow via the network node 1010 of the subscriber's home network 101 across the core network 300 to the network node 2010 of the home network 201 of the communication partner 2. From there, they arrive at the terminal 20 of the communication partner 2.

The processing of the session data in the network node 1010 is controlled via a control connection 52 by a dedicated session control function 1015 of the call signalling servers 1011 and 1012. The session control function 1015 may be integrated into any of the signalling servers 1011 and 1012, e.g., as a MGCF into a control unit 1016 of the signalling server 1011, or may be represented by a separate module (MGCF = Media Gateway Control Function).

For triggering a handover to his other terminal 11, the subscriber 1 may push a pre-defined button on his current terminal 10. Another possibility to trigger a handover is that the subscriber 1 hooks off the handset of his second terminal 11 during the on-going communication session of his first terminal 10. Or, the subscriber 1 dials a specific telephone number associated to the application server 1014 where his terminals 10, 11 and the subscriber's 10 call state are identified.

For example, an application determines the telephone terminals 10, 11 of the subscriber 1, and the on-going communication session. An application on the application server 1014 interprets the trigger received from the subscriber 1 as indication that the subscriber 1 wants to change from his currently active terminal to his other, currently inactive terminal 11 in a pre-defined manner. Other possibilities triggering a handover include a web interface, an application related to presence & preference services, or RFID and Bluetooth related recognition features.

For example, an RFID-enabled phone 11 receives signals from a currently used mobile terminal 10 of the subscriber 1 when the subscriber 1 is located in the vicinity of the RFID-enabled phone 11. According to pre-defined preferences of the subscriber 1, the RFID-enabled phone 11 automatically triggers the handover of the on-going communication session from the subscriber's currently used mobile terminal 10 to the RFID-enabled phone 11. It is also possible that the application server 1014 provides the subscriber 1 with a user-friendly GUI or a voice interface to initiate the session mobility (GUI = Graphical User Interface).

After the subscriber 1 has triggered the session transfer, the application on the application server 1014 performs a dedicated workflow for achieving the seamless session mobility. In a communication network 3 operated under the SIP protocol, the call signalling servers 1011, 1012, 1021, 2011 and 2021 may be represented by CSCFs, i.e., functional entities within the IMS as standardised by the 3GPP which are used to process SIP signalling packets (CSCF = Call Session Control Function; 3GPP = Third Generation Partnership Project). Then, the workflow on the signalling plane 41 may be as follows.

In response to a trigger event originating from the subscriber's terminal 10, the P-CSCF 1021 in the visited network 102 determines the I-CSCF 1011 in the home network 101. Then, the I-CSCF 1011 determines the S-CSCF 1012 which is always in the home network 101. The choice of the S-CSCF 1012 depends on the service the subscriber 1 wants to use. The subscriber's service profile identifying the services the subscriber 1 wishes to use is stored in a data base 1013 of the HSS. Thus, the I-CSCF 1011 consults the HSS as to what S-CSCF to choose. The chosen S-CSCF 1012 may locate an appropriate application server (= AS) 1014 for the session handover.

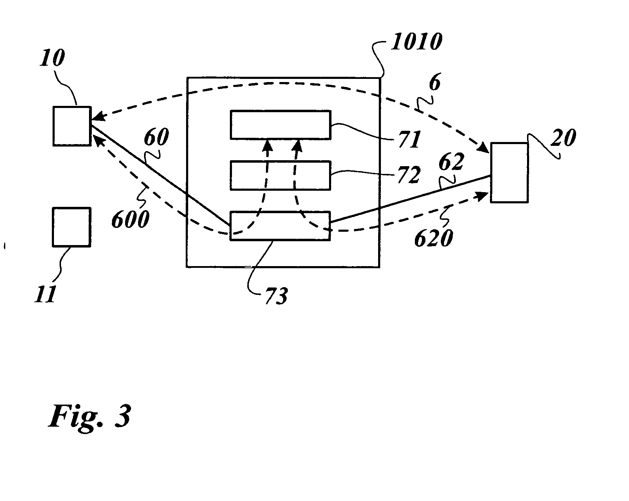

The AS 1014 selects the network node 1010 which processes the current session. Fig. 3 gives a representation of the network node 1010 processing the session 60, 62. The network node 1010 comprises a media conversion unit 71, a NAT traversal unit 72, and a termination unit 73 (NAT = Network Address Translation).

The network node 1010 may be represented by, e.g., a media gateway or a session border controller. Normally, the network node 1010 terminates and newly establishes the session 60, 62 between the subscriber 1 and the communication partner 2, e.g., operated as logical media flow 600, 620 under the RTP protocol, to perform additional functionalities on the session 60, 62 such as transcoding, NAT traversal, network hiding, legal interception, etc (RTP = Real Time Transport Protocol). Thus, the termination unit 73 works as a client and as a server, in the framework of a logical RTP connection 6 between the subscriber 1 and the communication partner 2.

In a preferred embodiment, the call signalling server 1012, e.g., a S-CSCF, runs as a B2BUA (= Back to Back User Agent), i.e., the end-to-end session 6 between the subscriber 1 and the communication partner 2 is implemented as two sessions 60, 62, whereby one session 60 is between the first subscriber's terminal 10 and the network node 1010 and the other session 62 is between the network node 1010 and the communication partner's terminal 20. Therefore, the communication session 62, e.g., a RTP session, between the network node 1010 and the communication partner's terminal 20 will never be touched during the following handover process. The network node 1010 performs a connecting pipe involving media functions.

The invention requires a network node 1010, i.e., a media gateway or a session border controller, with media functionalities which is controllable via a suitable signalling protocol such as SIP, H.323 or MEGACO by appropriate functional modules such as a call signalling server 1011, 1012 and an associated AS 1014. A call signalling server and an associated application server are basic modules of a typical NGN/IMS/TISPAN application.

The AS 1014 performs all the services which the subscriber 1 has subscribed to. Seamless session mobility is one of these user services. As the subscriber 1 has subscribed various services which are in general - according to the concept of the IMS - performed in the service provider's home network 101, the selected network node 1010 will be part of the service provider's home network 101, too.

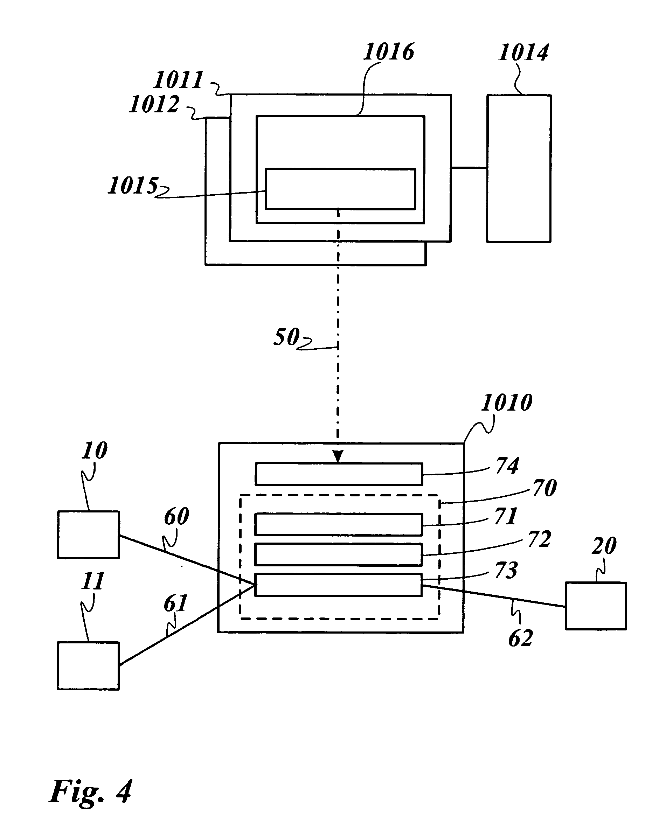

Fig. 4 shows the next step where the AS 1014 triggers the session control function 1015 of the call signalling server 1011 to send a control message via a control connection 50 to the network node 1010. Activated by means of the control message, the network node 1010 initiates a signalling, e.g., a SIP signalling, between the network node 1010 and the subscriber's second terminal 11. The signalling initiates the establishment of a new session 61, e.g., an RTP session, between the subscriber's second terminal 11 and the network server 1010.

By means of another control message sent via the control connection 50, the AS 1014 advises the network node 1010 to instantiate a copy and mix function into the internal media pipe of the network node 1010. Fig. 4 shows an embodiment where the copy and mix function has been added to the conventional functions 70 of the network node 1010 in form of a conferencing module 74. The conferencing module 74 will be used to mix data packets received from the first terminal 10 and the second terminal 11 of the subscriber 1 onto the communication session 62 to the terminal 20 of the subscriber's communication partner 2 and copy data packets received from the terminal 20 of the subscriber's communication partner 2 onto the communication sessions 60 and 61 to the first terminal 10 and the second terminal 11, respectively, of the subscriber 1.

Generally, the copy and mix function can be implemented into the internal pipe of the network node 1010 in various ways. A straightforward way is to implement temporarily elements of a conferencing switch 74 which is used to copy data packets of one media stream in one direction and and to mix data packets of two media streams in the other direction.

As soon as the subscriber 1 accepts, preferably on the subscriber's second terminal 11, a call corresponding to the establishment of the second session 61 between the network node 1010 and the subscriber's second terminal 11, a new communication session 61, preferably a RTP session, is established between the subscriber's second terminal 11 and the network node 1010. Within the network node 1010, this session 61 is bound to the conferencing session within the network node 1010, preferably by connecting the upcoming session 61 with the copy and mix function of the conferencing module 74. Therefore, both terminals 10 and 11 of the subscriber 1 are in the conference session and the subscriber 1 can now follow the communication session 60, 61, 62 either on terminal 10 or terminal 11.

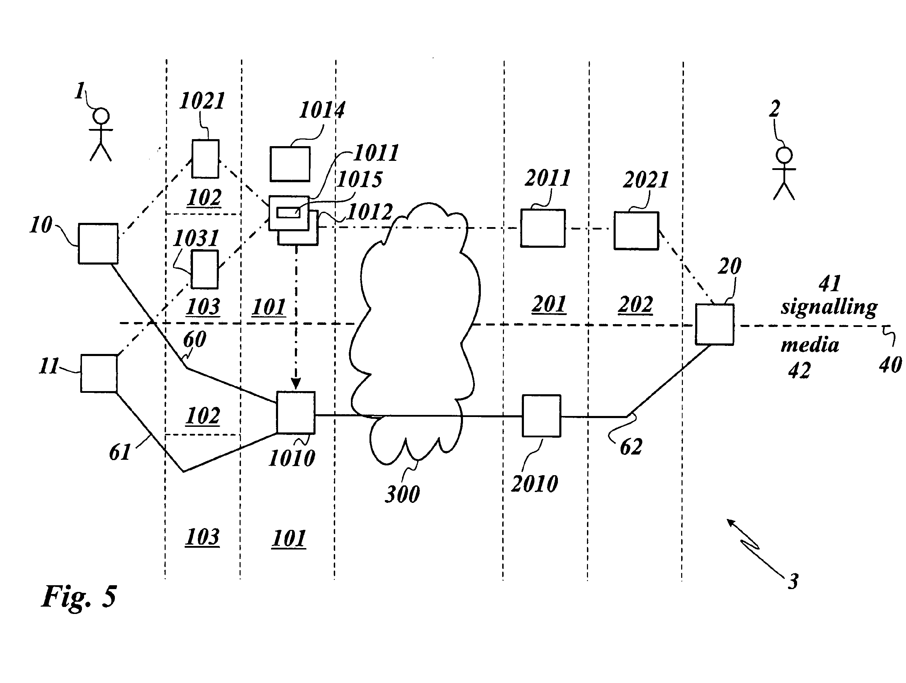

Fig. 5 shows the communication network 3 in the situation when the second session 61 between the subscriber's second terminal 11 and the network node 1010 has been established and the subscriber 1 can communicate over his two terminals 10 and 11. The signalling plane 41 used for the transmission of signalling and control traffic and the media transport plane 42 used for the transmission of media data traffic are displayed as in Fig. 2. Also, both planes 41, 42 are separated for better distinction in Fig. 5 by means of the dashed line 40.

The subscriber's first terminal 10 is connected on the signalling plane 41 to the call signalling server 1021 in the subscriber's visited access network 102, from there to the call signalling server 1011 in the subscriber's home network 101, and from there through the core network 300 to the call signalling server 2011 in the home network 201 of the communication partner 2. The call signalling server 2011 is connected to the call signalling server 2021 in the visited access network 202 of the communication partner 2, and from there the signalling traffic flows to the terminal 20 of the communication partner 2. Thus, there is a continuous signalling traffic connection between the first terminal 10 of the subscriber 1 and the terminal 20 of the communication partner 2.

Likewise, the subscriber's second terminal 11 is connected on the signalling plane 41 to the call signalling server 1031 in the subscriber's visited access network 103 and from there to the call signalling server 1011 in the subscriber's home network 101. From there, the flow of the signalling traffic is analogous to the flow of the signalling traffic related to the subscriber's first terminal 10, mentioned above.

The media traffic, i.e., the data packets are exchanged between the first terminal 10 and the second terminal 11 of the subscriber 1, respectively, and the terminal 20 of the communication partner 2. The data packets with respect to the subscriber's first terminal 10 flow via the network node 1010 of the subscriber's home network 101 across the core network 300 to the network node 2010 of the home network 201 of the communication partner 2. From there, they arrive at the terminal 20 of the communication partner 2. The data packets with respect to the subscriber's second terminal 11 also flow to the network node 1010 of the subscriber's home network 101, and from there on the same path as mentioned above with respect to the subscriber's first terminal 10.

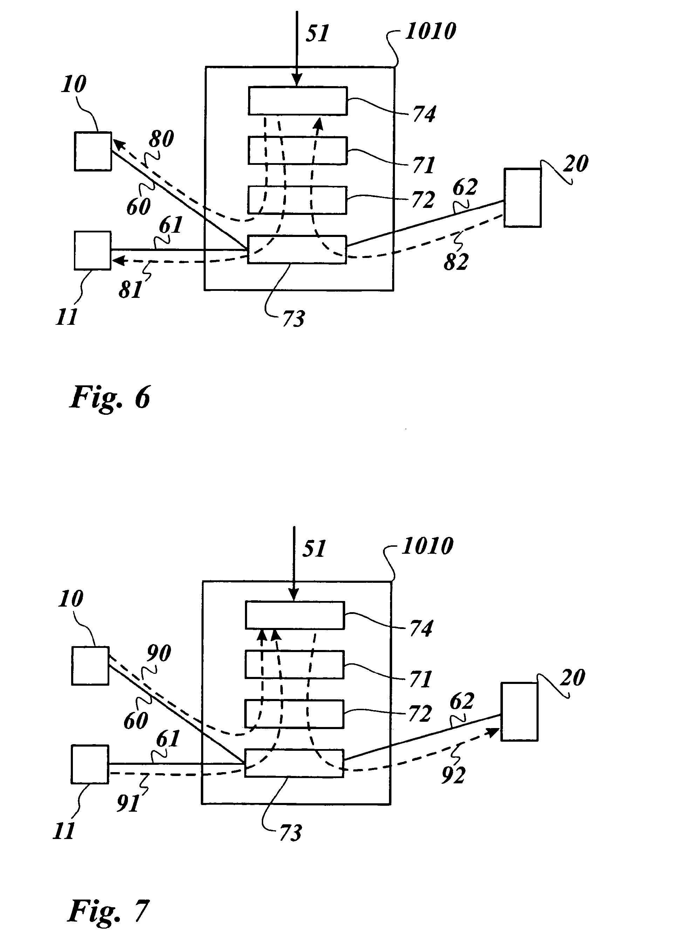

Figs. 6 and 7 show the processing of the data stream packets associated with the communication session 60, 61, 62 within the network node 1010. The network node 1010 is controlled by the AS 1014 via a control connection 51 from the session control function 1015 of the call signalling servers 1011, 1012 to the network node 1010. The AS 1014 controls the performance of the conferencing function 74 of the network node 1010.

As shown in detail in Fig. 6, each packet of the data stream 82 received at the conferencing function 74 via the session connection part 62 from the communication partner's terminal 20 is copied. Now, one of the two identical packets is sent in a data stream 80 from the conferencing function 74 of the network node 1010 via the the session connection part 60 to the subscriber's first terminal 10, the other one of the two identical packets is sent in a data stream 81 from the network node 1010 via the session connection part 61 to the subscriber's first terminal 11.

As shown in detail in Fig. 7 for the opposite data direction, the data stream packets 90 received at the conferencing module 74 via the session connection part 60 from the subscriber's first terminal 10 are mixed with the data stream packets 91 received at the conferencing module 74 via the parallel session connection part 61 from the subscriber's first terminal 11. The mixing may be performed in a conventional manner as is known to the skilled person familiar with the technique of a conferencing switch.

A possibly required media transcoding of the data packets 80, 81, 82, 90, 91, 92 will also be done in the network node 1010, preferably by means of the media conversion unit 71.

However, it is to be noted that the conferencing function 74 needed for the present invention does not require that data packets 90 received from the subscriber's terminal 10 be sent to the subscriber's terminal 11, and vice versa. Therefore, the present conferencing function 74 can be realised by a conferencing switch with a reduced functionality, i.e., comprising only a one-way mixing and an opposite-way copying function.

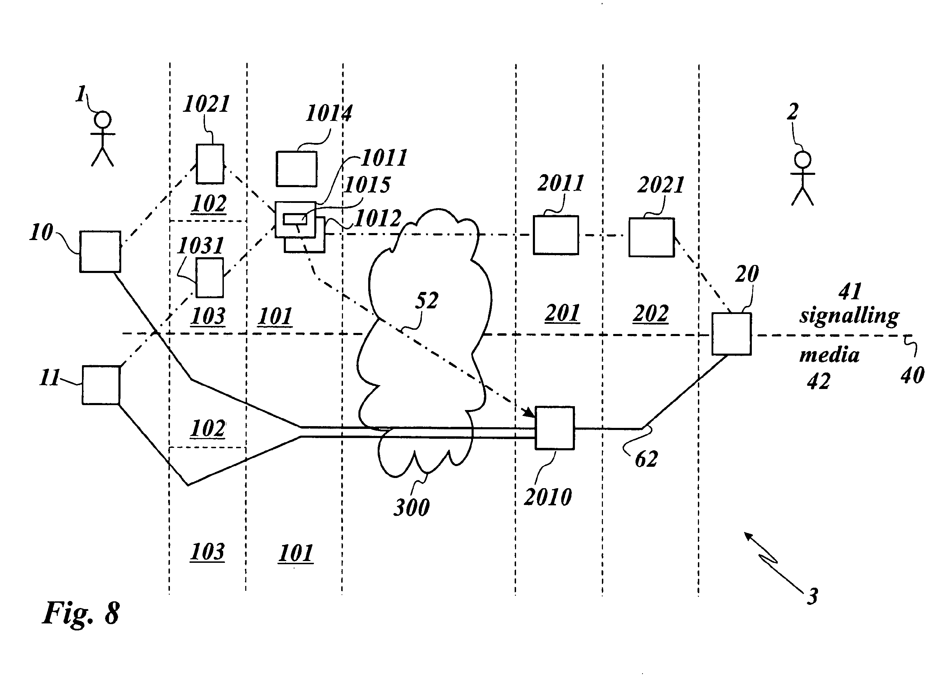

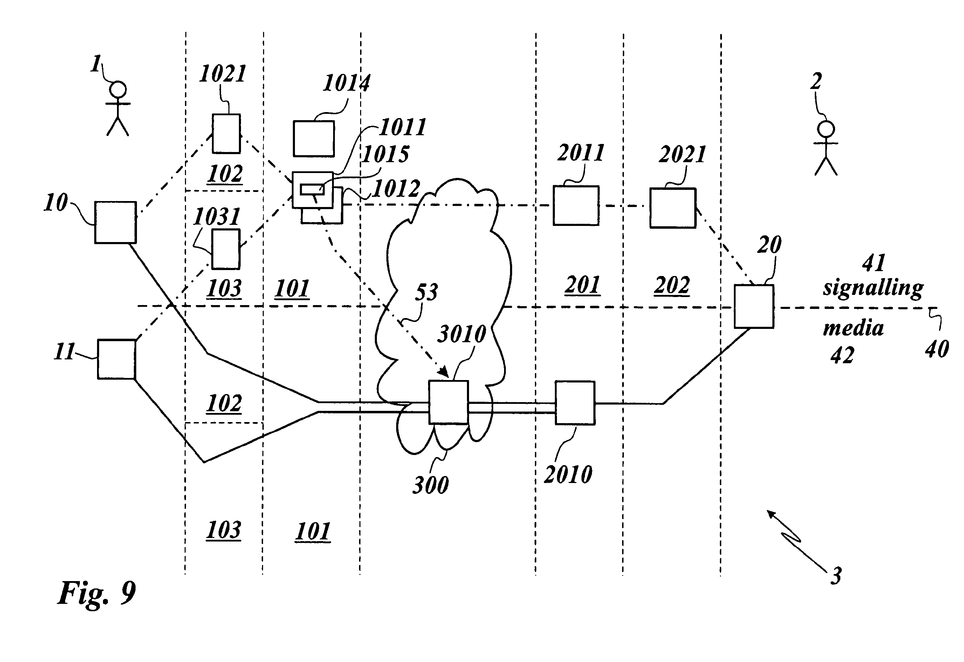

Fig. 8 gives another embodiment of the architecture as described in Fig. 5. In contrast to the architecture shown in Fig. 5, Fig. 8 shows that the AS 1014 has selected the network node 2010, located in the home network 201 of the communication partner 2, for the processing of the handover, in particular for the mixing and copying of the data packets during the handover. In still another embodiment, Fig. 9 shows that the AS 1014 has selected a network node 3010, located in the core network 300 of the communication network 3, for the processing of the handover, in particular for the mixing and copying of the data packets during the handover.

Likewise, also other suitabel network elements of the communication network 3 may be chosen by the AS 1014 to execute the handover.

In principle, the AS 1014 may select and control any network node of the communication network 3 on the common part of the media path between the terminal 20 of the communication partner 2 and the two involved terminal 10, 11 of the subscriber 1. The network node to perform the above described functions for the seamless session mobility is determined on the aspects of minimum network resources, authorisation, etc.

Once the subscriber 1 has realised that the current communication session is conferenced to both of his terminals 10 and 11, the subscriber 1 may hang up the terminal 10. As soon as the subscriber 10 hangs up the terminal 10, the call signalling server 1011 may receive a signal from the hung-up terminal 10 about the hang-up. Then, the AS 1014 may trigger the network node 1010 that the session component 60 between the terminal 60 and the network node 1010 is also terminated but the session component 61 between the terminal 11 and the network node 1010 remains. The terminal 20 of the communication partner 2 experiences no change on the media session part 62 because the media session is divided into two parts, one part being the session components 60, 61 and the other part being the session component 62, which are only connected via the network node 1010 internal pipe. Therefore, the session is handed over without interruption.

The AS 1014 can now decide to remove the conferencing module 74 out of the network node internal pipe as it is not required any more and to free the corresponding resources that were bound by the conferencing module 74.

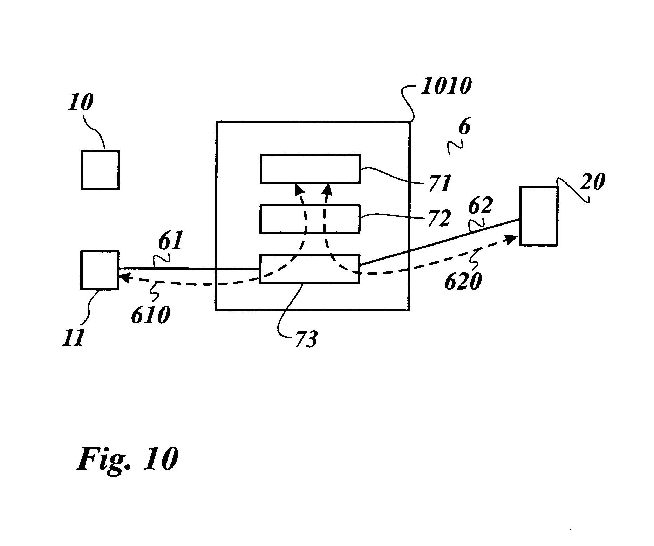

Fig. 10 shows the network node 1010 in a moment after the handover is performed and the conferencing module 74 has been withdrawn from the media flow 610, 620. The subscriber's 1 first terminal 10 is withdrawn from the communication session and is not used any more. Instead, the subscriber's 1 second terminal 11 has taken over the function of the subscriber's 1 communication session end point. The communication session has been handed over from the first terminal 10 to the second terminal 11, and the communication session is performed as the session parts 61, 62, i.e., the session part 62 between the terminal 20 of the communication partner 2 and the network node 1010 and the session part 61 between the terminal 11 of the subscriber 1 and the network node 1010.

## Claims

1. A method of performing a handover of a real time communication session (60, 62), established between a first terminal (10) of a subscriber (1) and a terminal (20) of a communication partner (2) of the subscriber (1) through a packet network (300), from the first terminal (10) of the subscriber (1) to a second terminal (11) of the subscriber (1), the first terminal (10) of the subscriber (1) associated with a first access network (102) of the packet network (300) and the second terminal (11) of the subscriber (1) associated with a second access network (103) of the packet network (300), whereby said established communication session (60, 62) comprises the exchange of media data packets between a network node (1010, 2010, 3010) and the first terminal (10) of the subscriber (1), and whereby the method comprises the steps of:
generating at a call signalling server (1011), in response to a trigger, control messages regarding the processing of the handover;
receiving and processing said control messages at the network node (1010, 2010, 3010);
triggered by said control messages, initiating by the network node (1010, 2010, 3010) a signalling between the network node (1010, 2010, 3010) and the second terminal (11) of the subscriber (1) for establishing a communication session (61) between the network node (1010, 2010, 3010) and the second terminal (11) of the subscriber (1);
mixing, by the network node (1010, 2010, 3010), media data packets (90, 91) received from the first terminal (10) and the second terminal (11) of the subscriber (1) onto a media data stream (92) of the communication session (62) towards the terminal (20) of the subscriber's communication partner (2) and copying media data packets (82) received from the terminal (20) of the subscriber's communication partner (2) onto media data streams (80, 81) of the communication sessions (60, 61) towards the first terminal (10) and the second terminal (11) of the subscriber (1);
terminating the exchange of media data packets between the network node (1010, 2010, 3010) and the first terminal (10) of the subscriber (1) via the first access network (102) within the context of the communication session (60, 61, 62) on completion of the handover.

2. The method of claim 1,
**characterised in**
**that** the method comprises the further steps of:
selecting a network node (1010, 2010, 3010) engaged in the current communication session (60, 62);
establishing a communication session (61) between said network node (1010, 2010, 3010) and the second terminal (11) of the subscriber (1); terminating the exchange of media data packets between the network node (1010, 2010, 3010) and the first terminal (10) of the subscriber (1) via the first access network (102) within the context of the communication session (60, 61, 62) when the subscriber (1) hangs up the first terminal (10).

3. The method of claim 1,
**characterised in**
**that** the method comprises the further steps of:
instantiating a conferencing function (74) in an internal media pipe of the network node (1010, 2010, 3010) for said mixing and copying of the media data packets (82, 90, 91);
conferencing the on-going communication sessions (60, 61, 62) to both terminals (10, 11) of the subscriber (1);
removing the conferencing function (74) out of the internal media pipe of the network node (1010, 2010, 3010) after the termination of the handover;
releasing resources assigned to the conferencing function (74).

4. The method of claim 1,
**characterised in**
**that** the method comprises the further steps of:
triggering the handover by the subscriber (1) on the first terminal (10).

5. The method of claim 1,
**characterised in**
**that** the method comprises the further steps of:
storing data related to settings and/or subscriber preferences of the handover in a data base (1013) and accessing said data in response to the trigger.

6. The method of claim 1,
**characterised in**
**that** the method comprises the further steps of:
receiving, at the network node (1010, 2010, 3010), control messages (50, 51, 52, 53) regarding the processing of the handover via a signalling protocol from a call signalling server (1011).

7. The method of claim 1,
**characterised in**
**that** the method comprises the further steps of:
selecting as appropriate network node (1010, 2010, 3010) a network node (1010) of the subscriber's service provider home network (101) or of the communication partner's service provider home network (201) or of a core network (300) of the communication session (60, 62).

8. A call signalling server (1011) for performing a handover of a real time communication session (60, 62), established between a first terminal (10) of a subscriber (1) and a terminal (20) of a communication partner (2) of the subscriber (1) through a packet network (300), from the first terminal (10) of the subscriber (1) to a second terminal (11) of the subscriber (1), the first terminal (10) of the subscriber (1) associated with a first access network (102) of the packet network (300) and the second terminal (11) of the subscriber (1) associated with a second access network (103) of the packet network (300), whereby said established communication session (60, 62) comprises the exchanged of media data packets between a network node (1010, 2010, 3010) and the first terminal (10) of the subscriber (1), and whereby the call signalling server (1011) comprises a control unit (1016) adapted to generate, in response to a trigger, control messages regarding the processing of the handover and is adapted to send said control messages to the network node (1010, 2010, 3010) for initiating, triggered by said control messages, a signalling between the network node (1010, 2010, 3010) and the second terminal (11) of the subscriber (1) for the establishment of a communication session (61) between the network node (1010, 2010, 3010) and the second terminal (11) of the subscriber (1), the mixing of media data packets (90, 91) received at the network node (1010, 2010, 3010) from the first terminal (10) and the second terminal (11) of the subscriber (1) onto a media data stream (92) of the communication session (62) towards the terminal (20) of the subscriber's communication partner (2), the copying of media data packets (82) received at the network node (1010, 2010, 3010) from the terminal (20) of the subscriber's communication partner (2) onto media data streams (80, 81) of the communication sessions (60, 61) towards the first terminal (10) and the second terminal (11) of the subscriber (1), and is adapted to initiate the termination of the exchange of media data packets between the network node (1010, 2010, 3010) and the first terminal (10) of the subscriber (1) via the first access network (102) within the context of the communication session (60, 61, 62) on completion of the handover.

9. The call signalling server of claim 8,
**characterised in**
**that** the signalling traffic of the call signalling server (1011) for control of the network node (1010, 2010, 3010) complies with the session initiation protocol or the H.323 protocol or the media gateway control protocol.

10. The call signalling server of claim 8,
**characterised In**
**that** the control unit (1016) is adapted to control the set-up of the communication session (60, 61, 62) as two discrete session parts, whereby the first session part (60, 61) is between the subscriber (1) and the network node (1010, 2010, 3010) and the second session part (62) is between the network node (1010, 2010, 3010) and the subscriber's communication partner (2), and wherein the second session part (62) remains untouched during the handover.

## Patentansprüche

1. Verfahren zur Durchführung eines Netzwerkwechsels einer Echtzeit-Kommunikations-Session (60, 62), die zwischen einem ersten Endgerät (10) eines Teilnehmers (1) und einem Endgerät (20) eines Kommunikationspartners (2) des Teilnehmers (1) durch ein Paketnetzwerk (300) eingerichtet wurde, vom ersten Endgerät (10) des Teilnehmers (1) zu einem zweiten Endgerät (11) des Teilnehmers (1), wobei das erste Endgerät (10) des Teilnehmers (1) einem ersten Zugangsnetzwerk (102) des Paketnetzwerks (300) und das zweite Endgerät (11) des Teilnehmers (1) einem zweiten Zugangsnetzwerk (103) des Paketnetzwerks (300) zugeordnet ist, wobei diese eingerichtete Kommunikations-Session (60, 62) den Austausch von Medien-Datenpaketen zwischen einem Netzwerkknoten (1010, 2010, 3010) und dem ersten Endgerät (10) des Teilnehmers (1) umfasst, und wobei das Verfahren die folgenden Schritte umfasst: Erzeugen von Steuernachrichten an einem Anrufsignalisierungs-Server (1011) als Reaktion auf ein Auslösesignal, entsprechend der Verarbeitung des Netzwerkwechsels; Empfangen und Verarbeiten dieser Steuernachrichten am Netzwerkknoten (1010, 2010, 3010);
ausgelöst durch diese Steuernachrichten, Einleitung einer Signalisierung zwischen dem Netzwerknoten (1010, 2010, 3010) und dem zweiten Endgerät (11) des Teilnehmers (1) durch den Netzwerkknoten (1010, 2010, 3010) zum Einrichten einer Kommunikations-Session (61) zwischen dem Netzwerkknoten (1010, 2010, 3010) und dem zweiten Endgerät (11) des Teilnehmers (1);
Mischen von Medien Datenpaketen (90, 91), die vom ersten Endgerät (10) und dem zweiten Endgerät (11) des Teilnehmers (1) empfangen wurden, auf einen Medien-Datenstrom (92) der Kommunikations-Session (62) zum Endgerät (20) des Kommunikationspartners (2) des Teilnehmers durch den Netzwerkknoten (1010, 2010, 3010) und Kopieren von Medien-Datenpaketen (82), die vom Endgerät (20) des Kommunikationspartners (2) des Teilnehmers empfangen wurden, auf Medien-Datenströme (80, 81) der Kommunikations-Sessions (60, 61) zum ersten Endgerät (10) und zum zweiten Endgerät (11) des Teilnehmers (1);
Beenden des Austauschs von Medien-Datenpaketen zwischen dem Netzwerkknoten (1010, 2010, 3010) und dem ersten Endgerät (10) des Teilnehmers (1) über das erste Zugangsnetzwerk (102) innerhalb des Kontexts der Kommunikations-Session (60, 61, 62) nach Abschluss des Netzwerkwechsels.

2. Verfahren gemäß Anspruch 1,
**dadurch gekennzeichnet,**
**dass** das Verfahren des Weiteren die folgenden Schritte umfasst:
Auswählen eines Netzwerkknotens (1010, 2010, 3010), der an der Kommunikations-Session (60, 62) beteiligt ist;
Einrichten einer Kommunikations-Session (61) zwischen diesem Netzwerkknoten (101.0, 2010, 3010) und dem zweiten Endgerät (11) des Teilnehmers (1);
Beenden des Austauschs von Medien-Datenpaketen zwischen dem Netzwerkknoten (1010, 2010, 3010) und dem ersten Endgerät (10) des Teilnehmers (1) über das erste Zugangsnetzwerk (102) innerhalb des Kontexts der Kommunikations-session (60, 61, 62), wenn der Teilnehmer (1) das erste Endgerät (10) auflegt.

3. Verfahren gemäß Anspruch 1,
**dadurch gekennzeichnet,**
**dass** das Verfahren des Weiteren die folgenden Schritte umfasst:
Einrichten einer Konferenzfunktion (74) in einer internen Medienleitung des Netzwerkknotens (1010, 2010, 3010) für dieses Mischen und Kopieren der Medien-Datenpakete (82, 90, 91);
Konferenzübertragung der laufenden Kommunikations-Sessions (60, 61, 62) an beide Endgeräte (10, 11) des Teilnehmers (1);
Entfernen der Konferenzfunktion (74) aus der internen Medienleitung des Netzwerkknotens (1010, 2010, 3010) nach dem Abschluss des Netzwerkwechsels;
Freigeben der Ressourcen, die der Konferenzfunktion (74) zugeordnet waren.

4. Verfahren gemäß Anspruch 1,
**dadurch gekennzeichnet,**
**dass** das Verfahren des Weiteren die folgenden Schritte umfasst :
Auslösen des Netzwerkwechsels durch den Teilnehmer (1) am ersten Endgerät (10).

5. Verfahren gemäß Anspruch 1,
**dadurch gekennzeichnet,**
**dass** das Verfahren des Weiteren die folgenden Schritte umfasst:
Speichern der Daten zu den Einstellungen und/oder Teilnehmervorgaben zum Netzwerkwechsel in einer Datenbank (1013) und Aufrufen dieser Daten als Reaktion auf das Auslösen.

6. Verfahren gemäß Anspruch 1,
**dadurch gekennzeichnet,**
**dass** das Verfahren des Weiteren die folgenden Schritte umfasst:
Empfangen von Steuernachrichten (50, 51, 52, 53) zur Verarbeitung des Netzwerkwechsels über ein Signalprotokoll von einem Anrufsignalisierungs-server (1011) am NeLzwerkknoten (1010, 2010, 3010).

7. Verfahren gemäß Anspruch 1,
**dadurch gekennzeichnet,**
**dass** das Verfahren des Weiteren die folgenden Schritte umfasst:
Auswählen eines Netzwerkknotens (1010) des Anbieter-Heim-Netzwerks (101) des Teilnehmers oder des Heim-Netzwerks (201) des Serviceanbieters des Kommunikationspartners oder eines Kern-Netzwerks (300) der Kommunikations-Session (60,62) als geeigneten Netzwerkknoten (1010, 2010, 3010).

8. Anrufsignalisierungs-Server (1011) zur Durchführung eines Netzwerkwechsels einer Echtzeit-Kommunikations-Session (60, 62), die zwischen einem ersten Endgerät (10) eines Teilnehmers (1) und einem Endgerät (20) eines Kommunikationspartners (2) des Teilnehmers (1) über ein Paketnetzwerk (300) eingerichtet wurde, vom ersten Endgerät (10) des Teilnehmers (1) zu einem zweiten Endgerät (11) des Teilnehmers (1), wobei das erste Endgerät (10) des Teilnehmers (1) einem ersten Zugangsnetzwerk (102) des Paketnetzwerks (300) zugeordnet ist, und wobei das zweite Endgerät (11) des Teilnehmers (1) einem zweiten Zugangsnetzwerk (103) des Paketnetzwerks (300) zugeordnet ist, wobei diese eingerichtete Kommunikations Session (60, 62) den Austausch von Medien Datenpaketen zwischen einem Netzwerkknoten (1010, 2010, 3010) und dem ersten Endgerät (10) des Teilnehmers (1) umfasst, und wobei der Anrufsignalisierungs-Server (1011) eine Steuereinheit (1016) umfasst, die so angepasst ist, dass sie als Reaktion auf einen Auslöser Steuernachrichten erzeugt zur Verarbeitung des Netzwerkwechsels und die so angepasst ist, dass sie Steuernachrichten an den Netzwerkknoten (1010, 2010, 3010) sendet zum Einleiten, ausgelöst durch diese Steuernachrichten, einer Signalisierung zwischen dem Netzwerkknoten (1010, 2010, 3010) und dem zweiten Endgerät (11) des Teilnehmers (1) zur Einrichtung einer Kommunikations-Session (61) zwischen dem Netzwerkknoten (1010, 2010, 3010) und dem zweiten Endgerät (11) des Teilnehmers (1), zum Mischen von Me dien-Datenpaketen (90, 91), die an dem Netzwerkknoten (1010, 2010, 3010) vom ersten Endgerät (1) und dem zweiten Endgerät (11) des Teilnehmers (1) empfangen wurden, in einen Medien-Datenstrom (92) der Kommunikations-Session (62) zum Endgerät (20) des Kommunikationspartners (2) des Teilnehmers, zum Kopieren der Medien-Datenpakete (82), die am Netzwerkknoten (1010, 2010, 3010) vom Endgerät (20) des Kommunikationspartners (2) des Teilnehmers empfangen wurden, in Medien-Datenströme (80, 81) der Kommunikations-Session (60, 61) zum ersten Endgerät (10) und zum zweiten Endgerät (11) des Teilnehmers (1), und die so angepasst ist, dass sie nach dem Abschluss des Netzwerkwechsels die Beendigung der Austauschs von Medien-Datenpaketen zwischen dem Netzwerkknoten (1010, 2010, 3010) und dem ersten Endgerät (10) des Teilnehmers (1) über das erste Zugangsnetz werk (102) innerhalb des Kontexts der Kommunikations-Session (60, 61, 62) einleitet.

9. Anrufsignalisicrungs-Server gemäß Anspruch 8,
**dadurch gekennzeichnet,**
**dass** der Signaldatenverkehr des Anrufsignalisierungs-Servers (1011) zur Steuerung des Netzwerkknotens (1010, 2010, 3010) dem Session-Einleitungsprotokoll oder dem H.323-Protokoll oder dem Media Gateway Control-Protokoll entspricht.

10. Anrufsignalisierungs-Server gemäß Anspruch 8,
**dadurch gekennzeichnet,**
**dass** die Steuerungseinheit (1016) so angepasst ist, dass sie die Einrichtung der Kommunikations-Session (60, 61, 62) als zwei diskrete Session-Teile steuert, wobei der erste Session-Teil (60, 61) zwischen dem Teilnehmer (1) und dem Netzwerkknoten (1010, 2010, 3010) liegt und der zweite Session-Teil (62) zwischen dem Netzwerkknoten (1010, 2010, 3010) und dem Kommunikationspartner (2) des Teilnehmers liegt, und wobei der zweite Session-Teil (62) während des Netzwerkwechsels unverändert bleibt.

## Revendications

1. Procédé permettant de réaliser un transfert intercellulaire d'une session de communication en temps réel (60, 62), établie entre un premier terminal (10) d'un abonné (1) et un terminal (20) d'un partenaire de communication (2) de l'abonné (1) par l'intermédiaire d'un réseau à commutation de paquets (300), du premier terminal (10) de l'abonné (1) à un second terminal (11) de l'abonné (1), le premier terminal (10) de l'abonné (1) associé à un premier réseau d'accès (102) du réseau à commutation de paquets (300) et le second terminal (11) de l'abonné (1) associé à un second réseau d'accès (103) du réseau à commutation de paquets (300), moyennant quoi ladite session de communication établie (60, 62) comprend l'échange de paquets de données média entre un noeud de réseau (1010, 2010, 3010) et le premier terminal (10) de l'abonné (1), et moyennant quoi le procédé comprend les étapes suivantes: générer au niveau d'un serveur de signalisation d'appels (1011), en réponse à un déclenchement, des messages de commande concernant le traitement du transfert intercellulaire ; recevoir et traiter lesdits messages de commande au niveau du noeud de réseau (1010, 2010, 3010)
déclenché par lesdits messages de commande, mettre en oeuvre par le noeud de réseau (1010, 2010, 3010) une signalisation entre le noeud de réseau (1010 : 2010, 3010) et le second terminal (11) de l'abonné (1) pour établir une session de communication (61) entre le noeud de réseau (1010.2010, 3010) et le second terminal (11) de l'abonné (1) ;
mélanger, par le noeud de réseau 3010 (1010, 2010, les paquets de données média (90, 91) reçus du premier terminal (10) et du second terminal (11) de l'abonné (1) sur un flot de données média (92) de la session de communication (62) vers le terminal (20) du partenaire de communication de l'abonné (2) et copier les paquets de données média (82) reçus du terminal (20) du partenaire de communication de l'abonné (2) sur les flots de données média (80, 81) des sessions de communication (60, 61) vers le premier terminal (10) et le second terminal (11) de l'abonné (1) ;
interrompre l'échange des paquets de données média entre le noeud de réseau (1010, 2010, 3010) et le premier terminal (10) de l'abonné (1) via le premier réseau d'accès (102) dans le contexte de la session de communication (60, 61, 62) lors de l'accomplissement du transfert intercellulaire.

2. Procédé selon la revendication 1,
**caractérisé en ce que**
le procédé comprend les autres étapes suivantes :
sélectionner un noeud de réseau (1010, 2010, 3010) engagé dans la session de communication en cours (60, 62) ;
établir une session de communication (61) entre ledit noeud de réseau (1010, 2010, 3010) et le second terminal (11) de l'abonné (1) ; interrompre l'échange de paquets de données média entre le noeud de réseau (1010, 2010, 3010) et le premier terminal (10) de l'abonné (1) via le premier réseau d'accès (102) dans le contexte de la session de communication (60, 61, 62) quand l'abonné (1) raccroche le premier terminal (10).

3. Procédé selon la revendication 1,
**caractérisé en ce que**
le procédé comprend les autres étapes suivantes :
instancier une fonction de conférence (74) dans un tuyau interne de média du noeud de réseau (1010, 2010, 3010) pour ledit mélange et ladite copie des paquets de données média (82, 90, 91) ;
mettre en conférence les sessions de communication en cours (60, 61, 82) sur les deux terminaux (10, 11) de l'abonné (1) ;
retirer la fonction de conférence (74) hors du tuyau interne de média du noeud de réseau (1010, 2010, 3010) après l'interruption du transfert intercellulaire ;
libérer les ressources affectées à la fonction de conférence (74).

4. Procédé selon la revendication 1,
**caractérisé en ce que**
le procédé comprend les autres étapes suivantes :
déclencher le transfert intercellulaire par l'abonné (1) sur le premier terminal (10).

5. Procédé selon la revendication 1,
**caractérisé en ce que**
le procédé comprend les autres étapes suivantes :
mémoriser les données liées aux réglages et/ou aux préférences de l'abonné du transfert intercellulaire dans une base de données (1013) et accéder auxdites données en réponse au déclenchement.

6. Procédé selon la revendication 1,
**caractérisé en ce que**
le procédé comprend les autres étapes suivantes :
recevoir, au niveau du noeud de réseau (1010, 2010, 3010), les messages de commande (50, 51, 52, 53) concernant le traitement du transfert intercellulaire via un protocole de signalisation d'un serveur de signalisation d'appels (1011).

7. Procédé selon la revendication 1,
**caractérisé en ce que**
le procédé comprend les autres étapes suivantes ;
sélectionner selon le cas le noeud de réseau approprié (1010, 2010, 3010) un noeud de réseau (1010) du réseau domestique du fournisseur de services de l'abonné (101) ou du réseau domestique du fournisseur de services du partenaire de communication (201) ou d'un réseau dorsal (300) de la session de communication (60, 62).

8. Serveur de signalisation d'appels (1011) permettant d'effectuer un transfert intercellulaire d'une session de communication en temps réel (60, 62), établie entre un premier terminal (10) d'un abonné (1) et un terminal (20) d'un partenaire de communication (2) de l'abonné (1) par l'intermédiaire d'un réseau à commutation de paquets (300), du premier terminal (10) de l'abonné (1) à un second terminal (11) de l'abonné (1), le premier terminal (10) de l'abonné (1) associé à un premier réseau d'accès (102) du réseau à commutation de paquets (300) et le second terminal (11) de l'abonné (1) associé à un second réseau d'accès (103) du réseau à commutation de paquets (300), moyennant quoi ladite session de communication établie (60, 62) comprend l'échange de paquets de données média entre un noeud de réseau (1010, 2010, 3010) et le premier terminal (10) de l'abonné (1), et moyennant quoi le serveur de signalisation d'appels (1011) comprend une unité de commande (1016) adaptée pour générer, en réponse à un déclenchement, des messages de commande concernant le traitement du transfert intercellulaire et est adapté pour envoyer lesdits messages de commande au noeud de réseau (1010, 2010, 3010) pour mettre en oeuvre, déclenchée par lesdits messages de commande, une signalisation entre le noeud de réseau (1010, 2010, 3010) et le second terminal (11) de l'abonné (1) pour l'établissement d'une session de communication (61) entre le noeud de réseau (1010, 2010, 3010) et le second terminal (11) de l'abonné (1) le mélange des paquets de données média (90, 91) reçus au niveau du noeud de réseau (1010, 2010, 3010) du premier terminal (10) et du second terminal (11) de l'abonné (1) sur un flot de données média (92) de la session de communication (62) vers le terminal (20) du partenaire de communication de l'abonné (2), la copie des paquets de données média (82) reçus au niveau du noeud de réseau (1010, 2010, 3010) du terminal (20) du partenaire de communication de l'abonné (2) sur les flots de données média (80, 81) des sessions de communication (60, 61) vers le premier terminal (10) et le second terminal (11) de l'abonné (1), et est adopté pour mettre en oeuvre l'interruption de l'échange des paquets de données média entre le noeud de réseau (1010, 2010, 3010) et le premier terminal (10) de l'abonné (1) via le premier réseau d'accès (102) dans le contexte de la session de communication (60, 61, 62) de l'accomplissement du transfert intercellulaire.

9. Serveur de signalisation d'appels selon la revendication 8,
**caractérisé en ce que**
le trafic de signalisation du serveur de signalisation d'appels (1011) pour commander le noeud de réseau (1010, 2010, 3010) se conforme au protocole d'ouverture de session ou au protocole H.323 ou au protocole de contrôle de passerelle de média.

10. Serveur de signalisation d'appels selon la revendication 8,
**caractérisé en ce que**
l'unité de commande (1016) est adaptée pour commander l'établissement de la session de communication (60, 81, 62) sous la forme de deux parties de session discrètes, moyennant quoi la première partie de session (60, 61) est entre l'abonné (1) et le noeud de réseau (1010, 2010, 3010) et la seconde partie de session (62) est entre le noeud de réseau (1010, 2010, 3010) et le partenaire de communication de l'abonné (2), et dans lequel la seconde partie de session (62) reste intacte pendant le transfert intercellulaire.
